# FASCICULE DE BREVET EUROPEEN

(11) **EP 2 240 344 B1**
(45) Date de publication et mention de la délivrance du brevet: **20.06.2012**
(21) Numéro de dépôt: 09710747.8
(22) Date de dépôt: 06.02.2009
(51) Int. Cl.: B60N 3/10

(54) **ÉLÉMENT DE PORTE-GOBELET ET PORTE-GOBELET COMPRENANT UN TEL ÉLÉMENT**
BECHERHALTERELEMENT UND BECHERHALTER MIT EINEM SOLCHEN ELEMENT
CUP HOLDER ELEMENT AND CUP HOLDER COMPRISING SUCH AN ELEMENT

(30) Priorité: 06.02.2008 FR 0800623
(43) Date de publication de la demande: 20.10.2010
(73) Titulaire: Renault s.a.s., 92100 Boulogne-Billancourt (FR)
(72) Inventeur: AUBIER, Olivier, F-78310 Maurepas (FR); CHHEANG, Nakry, F-78470 St Rémy Les Chevreuse (FR); REBOURS, Marc, F-45490 Corbeilles en Gatinais (FR)
(86) Numéro de dépôt international: PCT/FR2009/050189
(87) Numéro de publication internationale: WO 2009/101342

(56) Documents cités:
- DE-A1- 10 337 525
- DE-A1-102006 026 094
- DE-B3- 10 227 646
- US-A1- 2003 042 383
- US-A1- 2005 194 506

## Description

La présente invention se rapporte à un élément de porte-gobelet et à un porte-gobelet

Dans le présent texte, on utilise, dans un souci de concision, le terme « gobelet » dans un sens générique pour désigner tout conteneur normalement destiné à recevoir une boisson (café, thé, soupe, eau, soda, etc...) ou un aliment solide (pop-corn, bonbons, fruits secs, glace, etc...), tel que notamment un verre, une tasse, une canette, un flacon (tel qu'une bouteille individuelle de 20 cl environ), etc...

Par ailleurs, on utilise dans le présent texte les termes « vertical », « horizontal », « incliné » et « vers le bas ». Ceux-ci ne doivent pas être compris dans un sens absolu, mais simplement, dans un souci de clarté, compte tenu de l'orientation des figures.

Un porte-gobelet de type rétractable destiné à être monté sur une planche de bord d'un véhicule automobile est décrit dans le document de brevet US-6 105 917. La figure 1 illustre en coupe longitudinale ce porte-gobelet. Il comporte un boîtier 2 et un tiroir 4 qui peut être inséré dans le boîtier ou, comme représenté sur la figure, être en grande partie extrait de ce boîtier. Le tiroir 4 comporte un orifice 6 pour recevoir un gobelet 8. Il comprend également un bras de support 10 pivotant autour d'un axe 12 et dont une extrémité 14 est conformée pour supporter le fond du gobelet 8. La face avant du tiroir forme une façade 16.

Des porte-gobelets similaires de type rétractable sont également décrits dans DE 10 227 646 dans lequel un support de gobelet relié à un bras est articulé sur ce bras de manière à suivre un mouvement compliqué lors du déploiement du porte gobelet de sorte qu'en position de réception du gobelet, le support soit sensiblement à l'horizontale.

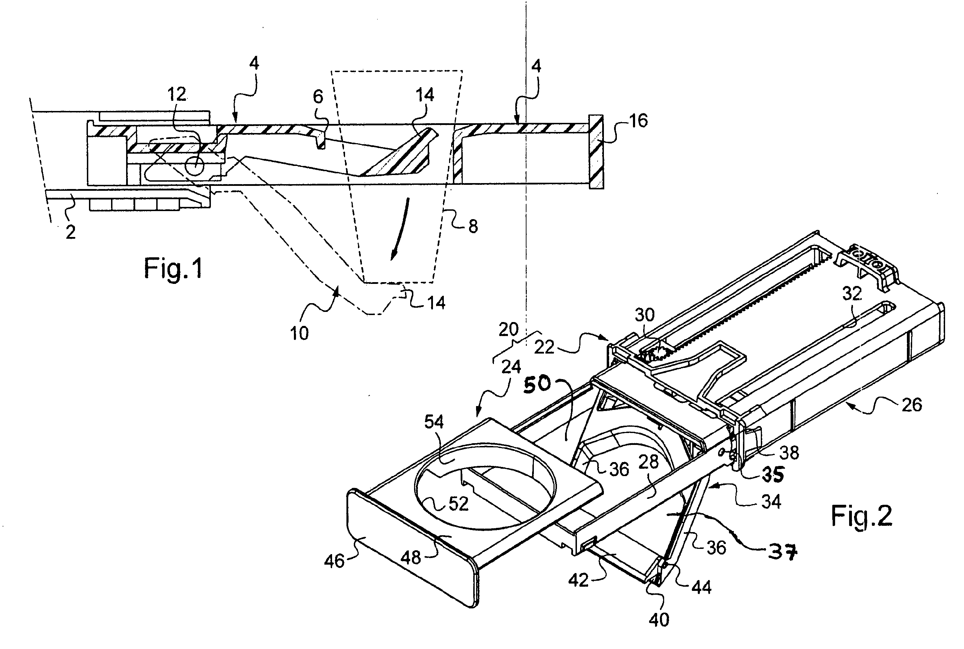

Ces porte-gobelets ne sont pas satisfaisants car, de par leur construction, ils sont adaptés chacun à une seule planche de bord. En effet, le galbe de la façade du porte-gobelet devant affleurer, pour des raisons esthétiques évidentes, le galbe de la planche de bord, le porte-gobelet est adapté à une seule planche de bord. Par exemple, si le galbe de la planche de bord est sensiblement vertical, le porte-gobelet de la figure 1 doit être inséré dans un logement sensiblement horizontal dans la planche de bord et le gobelet est alors en position sensiblement verticale. Si maintenant ie porte-gobelet est monté sur une planche de bord dont le galbe est incliné par rapport à la verticale, le porte-gobelet doit être inséré dans un logement incliné dans la planche de bord de manière que la façade du porte-gobelet affleure le galbe de la planche de bord. Mais, dans ce cas, le gobelet sera lui aussi en position incliné (du même angle que la façade du tiroir) et risquerait de laisser échapper une partie de son contenu qui pourrait se répandre dans l'habitacle du véhicule.

Ainsi, selon l'état de la technique, un porte-gobelet doit être conçu spécifiquement pour chaque planche de bord, ce qui en augmente les coûts de développement et de fabrication.

La présente invention vise à résoudre ce problème et plus particulièrement à proposer un porte-gobelet qui puisse être utilisé avec des planches de bord ayant des galbes différents.

La présente invention atteint son but en proposant un élément de porte-gobelet comprenant un boîtier, un tiroir muni d'un évidement, l'évidement étant destiné à recevoir un support de maintien pour un gobelet, un moyen d'insertion-extraction pour déplacer le tiroir entre une position de repos, dans laquelle le tiroir est dans le boîtier, et une position de travail, dans laquelle l'évidement du tiroir est au moins partiellement hors du boîtier, un bras support monté pivotant sur le tiroir, et un support de gobelet, caractérisé en ce que le support de gobelet est monté à pivotement libre sur ledit bras support.

Le fait de monter le support de gobelet à pivotement libre sur le bras support permet, quelle que soit l'inclinaison du tiroir et du boîtier, de faire reposer le gobelet sur une surface d'orientation désirée, généralement une surface horizontale. Ainsi, un seul et unique élément de porte-gobelet peut être utilisé avec des planches de bord ayant des galbes différents, ou de manière générale en combinaison avec des parois ayant des galbes différents, quel que soit le domaine d'application, desquelles il doit affleurer.

Selon une caractéristique avantageuse de l'invention, l'élément de porte-gobelet comprend une butée pour limiter le débattement du bras support en position déployée par rapport au tiroir.

Selon un mode de réalisation de l'invention, le bras support comporte deux branches parallèles de part et d'autre d'un évidement destiné à recevoir une partie du gobelet, et une poutre reliant lesdites branches parallèles de façon à former une butée pour le débattement du support de gobelet.

L'invention a également pour objet un porte-gobelet destiné à être monté sur une paroi ayant un galbe déterminé comprenant un élément de porte-gobelet selon l'invention et un support de maintien, monté dans l'évidement de l'élément de porte-gobelet, ledit support de maintien comprenant un plateau ayant un orifice de maintien d'un gobelet, et une façade de porte-gobelet, celle-ci ayant un galbe qui affleure le galbe de la paroi lorsque le porte-gobelet est monté sur la paroi.

Selon une forme d'exécution de l'invention, le plateau et la façade du support de maintien viennent de matière. Ils sont avantageusement réalisés par injection ou extrusion de matière plastique.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la figure 1, déjà décrite, illustre un porte-gobelet selon l'art antérieur,
- la figure 2 est une vue en perspective d'un porte-gobelet selon l'invention, en position de travail, comprenant un élément de porte-gobelet et un support de maintien de gobelet,
- la figure 3 est une coupe dans un plan de symétrie vertical d'un porte-gobelet selon l'invention, en position de repos, monté sur une planche de bord à galbe vertical,
- la figure 4 est une coupe dans un plan de symétrie vertical du porte-gobelet de la figure 3, en position de travail, et
- la figure 5 est une coupe dans un plan de symétrie vertical d'un porte-gobelet selon l'invention, en position de travail, monté sur une planche de bord à galbe incliné, l'élément de porte-gobelet étant identique à celui de la figure 4.

La figure 2 illustre en perspective un porte-gobelet 20 selon un mode de réalisation de l'invention. Dans la suite de la description, on supposera à titre d'exemple que le porte-gobelet est destiné à être monté sur une planche de bord d'un véhicule automobile. Il est cependant clair que le porte-gobelet pourrait être utilisé dans d'autres applications.

Le porte-gobelet représenté comprend un élément de porte-gobelet 22 et un support de maintien 24 pour un gobelet, le support de maintien 24 étant représenté en position non-montée sur l'élément de porte-gobelet 22.

L'élément de porte-gobelet comprend principalement un boîtier 26, un tiroir 28 et des moyens d'insertion/extraction pour insérer le tiroir dans le boîtier (position de repos) ou au contraire l'extraire partiellement du boîtier (position de travail).

Les moyens d'insertion-extraction peuvent être de tout type connu et notamment du type dénommé « push/pull », comprenant un crochet qui se déclenche lorsqu'un utilisateur appuie sur la face avant du tiroir, en position de repos, et qui se réenclenche lorsque l'utilisateur pousse le tiroir, en position de travail, dans le boîtier.

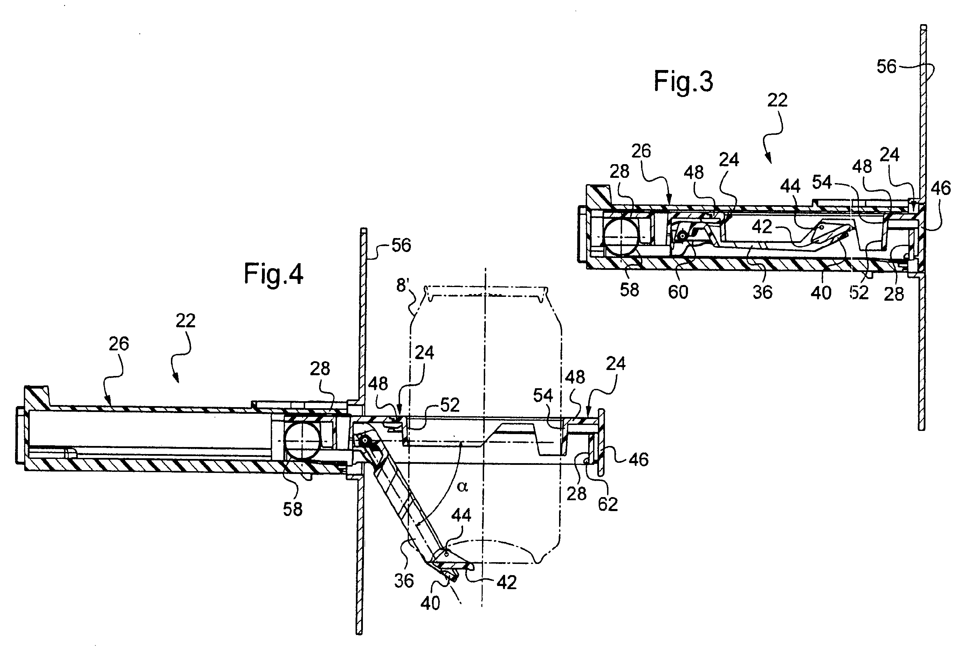

Les moyens d'insertion-extraction peuvent comprendre également un ressort de rappel du tiroir (visible sur les figures 3 à 5), un ralentisseur 30 pour une extraction douce du tiroir et une fente de guidage 32 dont chaque extrémité forme par ailleurs une butée définissant l'amplitude de translation du tiroir.

L'élément de porte-gobelet comprend en outre un bras support 34 monté pivotant sur le tiroir autour d'un axe 35 et dont le débattement (sur la figure 2 vers le bas) est limité par une butée 38. Ce bras support comprend deux branches parallèles 36 de part et d'autre d'un évidement 37 destiné à recevoir une partie d'un gobelet et une poutre 40 reliant la partie inférieure, c'est-à-dire distante du boîtier, de chaque branche 36.

A proximité de cette partie inférieure des branches 36 est disposé un support de gobelet 42 destiné à recevoir le fond d'un gobelet.

Selon l'invention, ce support de gobelet 42 est monté pivotant sur le bras support 34 autour d'un axe 44.

Comme on le verra de manière détaillée par la suite en référence aux figures 3 à 5, le fait de monter le support de gobelet 42 pivotant sur le bras de support permet d'utiliser le même élément de porte-gobelet avec des planches de bord de véhicule ayant des galbes différents. On comprend que cette standardisation d'une partie prépondérante du porte-gobelet présente un intérêt économique important.

L'adaptation d'un porte-gobelet à une planche de bord particulière s'obtient alors aisément par le choix d'un support de maintien 24 adéquat.

Ce support de maintien 24 est une pièce simple qui peut être réalisée par injection, extrusion, etc. Elle comprend une façade 46, dont l'orientation est choisie pour que, lorsque le support de maintien est monté sur un élément porte-gobelet et le porte-gobelet est monté sur une paroi de planche de tableau de bord d'un véhicule automobile, cette façade affleure le galbe de la planche de bord.

Le support de maintien 24 comprend également un plateau 48 destiné à être monté sur un évidement 50 du tiroir 28. Ce plateau comporte un orifice 52 dont la dimension est adaptée à la taille d'un gobelet. Bien que ce ne soit pas essentiel, l'orifice 52 est avantageusement doté de parois de maintien 54, pour un meilleur maintien du gobelet, l'orientation de ces parois étant choisie de manière que, lorsque le porte-gobelet est en position sur une paroi de planche de bord, les parois maintiennent de préférence le gobelet en position sensiblement verticale.

Le support de maintien 24 peut être solidarisé de l'élément porte-gobelet 26 notamment par encliquetage, collage, etc.

Dans les figures 3 à 5, qui vont maintenant être décrites, les éléments identiques à ceux de la figure 2 portent les mêmes références numériques.

La figure 3 illustre en coupe dans un plan de symétrie vertical un porte-gobelet selon l'invention, en position fermée, monté sur une paroi 56, telle que le galbe d'une planche de bord d'un véhicle automobile. A titre d'exemple, cette paroi est plane, mais on conçoit qu'elle pourrait également être courbe, la façade 46 du support de maintien 24 épousant alors une forme correspondante.

Sur cette figure, on note un ressort de rappel 58 pour rappeler le tiroir 28 en position de travail ainsi qu'un ressort de déploiement 60 du bras support 34 (figure 2) dont une branche 36 est visible sur la figure 3.

La position ouverte du porte-gobelet est représentée sur la coupe de la figure 4.

Après que l'utilisateur a libéré un crochet maintenant le tiroir en position fermée, le tiroir est extrait grâce à l'action du ressort 58. Cette extraction est contrôlée par le ralentisseur 30 (figure 2) en ce qui concerne sa vitesse et par la fente de guidage 32 (figure 2) en ce qui concerne son amplitude. Le bras support 34 est alors amené en position basse (au sens de la figure) par le ressort de déploiement 60. Son angle de débattement α est défini par la butée 38 (figure 2).

Pour ce porte-gobelet, destiné à équiper une paroi plane verticale, on choisit un support de maintien 24 comportant un façade 46 ayant un galbe adapté, ici vertical puisque le boîtier est disposé en position horizontale. De même, l'orientation de la paroi 54 de l'orifice 52 est choisie de manière que le gobelet 8' ait l'orientation désirée, généralement sensiblement verticale, lorsque le porte-gobelet est monté dans la paroi 56 de la planche de bord. Dans le cas considéré, la paroi 54 est sensiblement verticale, c'est-à-dire que son orientation est sensiblement la même que celle de la façade 46.

Le support de maintien 24 peut être fixé sur le tiroir de toute manière connue et par exemple, comme représenté, par encliquetage au moyen de pattes 62.

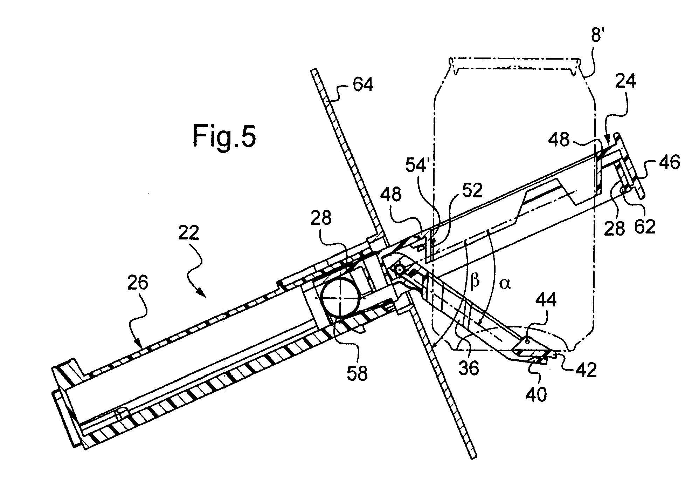

La figure 5 illustre la polyvalence de l'élément de porte-gobelet selon l'invention. Sur cette figure, dont la paroi 64, sur laquelle un porte-gobelet est destiné à être monté, est inclinée par rapport à la verticale, le même élément de porte-gobelet 22 que celui des figures 3 et 4 est utilisé. L'élément de porte-gobelet 22 est disposé dans un logement perpendicuiaire au plan de la paroi, mais on conçoit que l'angle β entre l'axe de translation du tiroir et le plan de la paroi peut avoir n'importe quelle valeur et n'est pas nécessairement un angle droit.

Conformément à l'invention, le support de gobelet 42 est monté pivotant autour de l'axe 42 sur le bras de support 34 (figure 2). Ceci permet d'offrir en toute circonstance, c'est-à-dire quelle que soit l'inclinaison du boîtier et du tiroir, un support stable pour le gobelet 8'.

De même, par le choix d'un support de maintien 24 adapté à la paroi 64 et à l'inclinaison du boîtier monté sur la paroi, en d'autres termes en sélectionnant une façade ayant un galbe correspondant à celui de la paroi 64 et un plateau 48 dont la paroi 54' de l'évidement 52 présente l'orientation désirée pour le maintien du gobelet 8' (orientation qui en général est choisie sensiblement verticale), on réalise un porte-gobelet adapté à la paroi 64.

On comprend donc que l'élément de porte-gobelet selon l'invention, grâce à la caractéristique selon laquelle le support de gobelet est monté à pivotement libre sur le bras de support, peut être utilisé pour une pluralité de planche de bord ayant des galbes différents.

## Revendications

1. Elément de porte-gobelet (22) comprenant un boîtier (26), un tiroir (28) muni d'un évidement (50), l'évidement (50) étant destiné à recevoir un support de maintien (24) pour un gobelet, un moyen d'insertion-extraction pour déplacer le tiroir (28) entre une position de repos, dans laquelle le tiroir (28) est dans le boîtier (26), et une position de travail, dans laquelle l'évidement (50) du tiroir est au moins partiellement hors du boîtier (26), un bras support (34) monté pivotant sur le tiroir (28), et un support de gobelet (42), **caractérisé en ce que** le support de gobelet (42) est monté à pivotement libre sur ledit bras support (34) de manière à offrir un support stable pour le gobelet quelle que soit l'inclinaison du boîtier (26) et du tiroir (28).

2. Elément de porte-gobelet selon la revendication 1, **caractérisé en ce qu'**il comprend une butée (38) pour limiter le débattement (α) du bras support (34) en position déployée par rapport au tiroir (28).

3. Elément de porte-gobelet selon l'une des revendications précédentes, **caractérisé en ce que** le bras support (34) comporte deux branches (36) parallèles de part et d'autre d'un évidement (37) destiné à recevoir une partie du gobelet, et une poutre (40) reliant lesdites branches parallèles de façon à former une butée pour le débattement du support de gobelet (42).

4. Porte-gobelet (20) destiné à être monté sur une paroi (56, 64) ayant un galbe déterminé, **caractérisé en ce qu'**il comprend un élément de porte-gobelet (22) selon l'une quelconque des revendications précédentes et un support de maintien (24), monté dans l'évidement (50) de l'élément de porte-gobelet (22), ledit support de maintien (24), comprenant un plateau (48) ayant un orifice (54) de maintien d'un gobelet, et une façade (46) de porte-gobelet, celle-ci ayant un galbe qui affleure le galbe de la paroi lorsque le porte-gobelet (20) est monté sur la paroi.

5. Porte-gobelet selon la revendication 4, **caractérisé en ce que** le plateau (48) et la façade (46) viennent de matière.

6. Porte-gobelet selon la revendication 5, **caractérisé en ce que** le support de maintien (24) est obtenu par extrusion ou injection de matière plastique.

## Claims

1. Cup-holder element (22) comprising a housing (26), a drawer (28) provided with a void (50), the void (50) being intended to receive a holding support (24) for a cup, an insertion-extraction means for displacing the drawer (28) between a rest position, in which the drawer (28) is in the housing (26), and a working position, in which the void (50) of the drawer is at least partially out of the housing (26), a support arm (34) mounted to pivot on the drawer (28), and a cup support (42), **characterized in that** the cup support (42) is mounted to pivot freely on said support arm (34) so as to offer a stable support for the cup regardless of the inclination of the housing (26) and of the drawer (28).

2. Cup-holder element according to Claim 1, **characterized in that** it comprises an abutment (38) to limit the travel (α) of the support arm (34) in the deployed position relative to the drawer (28).

3. Cup-holder element according to one of the preceding claims, **characterized in that** the support arm (34) has two parallel branches (36) on either side of a void (37) intended to receive a part of the cup, and a beam (40) linking said parallel branches so as to form an abutment for the travel of the cup support (42).

4. Cup-holder (20) intended to be mounted on a wall (56, 64) having a determined profile, **characterized in that** it comprises a cup-holder element (22) according to any one of the preceding claims and a holding support (24), mounted in the void (50) of the cup-holder element (22), said holding support (24) comprising a deck (48) having an orifice (54) for holding a cup, and a cup-holder front face (46), that latter having a profile which is flush with the profile of the wall when the cup-holder (20) is mounted on the wall.

5. Cup-holder according to Claim 4, **characterized in that** the deck (48) and the front face (46) consist of a single piece.

6. Cup-holder according to Claim 5, **characterized in that** the holding support (24) is obtained by plastic extrusion or injection.

## Patentansprüche

1. Becherhalterelement (22), das ein Gehäuse (26), einen mit einer Aussparung (50) versehenen Einschub (28), wobei die Aussparung (50) dazu bestimmt ist, einen Halteträger (24) für einen Becher aufzunehmen, eine Einschieb-Auszieheinrichtung, um den Einschub (28) zwischen einer Ruhestellung, in der der Einschub (28) sich im Gehäuse (26) befindet, und einer Arbeitsstellung zu verschieben, in der die Aussparung (50) des Einschubs sich zumindest teilweise außerhalb des Gehäuses (26) befindet, einen Tragarm (34), der schwenkbar auf den Einschub (28) montiert ist, und einen Becherträger (42) enthält, **dadurch gekennzeichnet, dass** der Becherträger (42) frei schwenkbar auf den Tragarm (34) montiert ist, um dem Becher einen stabilen Halt zu bieten, unabhängig von der Neigung des Gehäuses (26) und des Einschubs (28).

2. Becherhalterelement nach Anspruch 1, **dadurch gekennzeichnet, dass** es einen Anschlag (38) aufweist, um den Ausschlag (α) des Tragarms (34) in der auseinandergezogenen Stellung bezüglich des Einschubs (28) zu begrenzen.

3. Becherhalterelement nach einem der vorhergehenden Ansprüche, **dadurch gekennzeichnet, dass** der Tragarm (34) zwei parallele Schenkel (36) zu beiden Seiten einer Aussparung (37), die dazu bestimmt ist, einen Teil des Bechers aufzunehmen, und einen Balken (40) aufweist, der die parallelen Schenkel verbindet, um einen Anschlag für den Ausschlag des Becherträgers (42) zu bilden.

4. Becherhalter (20), der dazu bestimmt ist, auf eine Wand (56, 64) montiert zu werden, die eine bestimmte Rundung hat, **dadurch gekennzeichnet, dass** er ein Becherhalterelement (22) nach einem der vorhergehenden Ansprüche und einen Halteträger (24) enthält, der in die Aussparung (50) des Becherhalterelements (22) montiert ist, wobei der Halteträger (24) eine Platte (48) mit einer Halteöffnung (54) für einen Becher und eine Becherhalter-Fassade (46) enthält, die eine Rundung hat, die bündig an der Rundung der Wand anliegt, wenn der Becherhalter (20) auf die Wand montiert ist.

5. Becherhalter nach Anspruch 4, **dadurch gekennzeichnet, dass** die Platte (48) und die Fassade (46) aus dem gleichen Material sind.

6. Becherhalter nach Anspruch 5, **dadurch gekennzeichnet, dass** der Halteträger (24) durch Extrusion oder Injektion von Kunststoff erhalten wird.
